# FASCICULE DE BREVET EUROPEEN

(11) **EP 0 583 995 B1**
(45) Date de publication et mention de la délivrance du brevet: **11.06.1997**
(21) Numéro de dépôt: 93401774.0
(22) Date de dépôt: 07.07.1993
(51) Int. Cl.: B23K 26/00

(54) **Procédé de soudage d'au moins deux tôles de différentes épaisseurs**
Verfahren zum Laserschweissen von mindestens zwei Metallblechen unterschiedlicher Dicke
Method of welding at least two metal sheets having different thicknesses

(30) Priorité: 14.08.1992 FR 9210056
(43) Date de publication de la demande: 23.02.1994
(73) Titulaire: SOLLAC, F-92800 Puteaux (FR)
(72) Inventeur: Peru, Gilles, F-59240 Dunkerque (FR); Claeys, Joel, F-59380 Socx (FR)
(74) Mandataire: Lanceplaine, Jean-Claude

(56) Documents cités:
- EP-A- 0 279 866
- PATENT ABSTRACTS OF JAPAN vol. 10, no. 388 (M-549)(2445) 25 Décembre 1986 & JP-A-61 176 490 (MITSUBISHI ELECTRIC CORP.) 8 Aoüt 1986

## Description

La présente invention concerne un procédé de soudage bord à bord d'au moins deux tôles de différentes épaisseurs au moyen d'un faisceau laser.

Dans les industries du type de la construction navale, du bâtiment, des travaux publics, ou de la construction mécano-soudée par exemple de réservoirs sous pression, il est souvent demandé de souder bord à bord des tôles d'épaisseur importante, de l'ordre de 3 à 15 mm, voire 20mm, et parfois même de souder ensemble bord à bord de telles tôles d'épaisseurs différentes, par exemple une tôle d'épaisseur de 10mm avec une tôle d'épaisseur de 6mm, lesdites tôles pouvant même être de nuance différente.

Pour réaliser le soudage de tôles d'épaisseur supérieure à 3mm, dites tôles épaisses, il est connu d'utiliser le soudage à l'arc, c'est à dire que les tôles sont soudées au moyen d'une électrode de soudage en créant un arc électrique entre les tôles et l'éléctrode, cet arc électrique fond l'électrode amenant ainsi du métal d'apport au niveau du plan de joint des tôles.

Pour cela, il est nécessaire de retourner les tôles après avoir effectué une première passe de soudage sur une face des tôles, pour effectuer une seconde passe de soudage sur l'autre face desdites tôles.

Ce type de soudage à l'arc présente l'inconvénient majeur de nécessiter deux passes de soudage, ce qui, d'une part, double le temps de soudage et, d'autre part, nécessite une installation de retournement des tôles.

Pour éviter de retourner les tôles et lorsque cette opération est impossible à réaliser, il est connu d'utiliser des supports des tôles en cuivre ou en céramique. Mais de tels supports sont très coûteux.

De plus, le soudage à l'arc entraîne une zone thermiquement affectée très large réduisant ainsi les caractéristiques mécaniques de la pièce soudée.

Par ailleurs, il est également connu pour effectuer un tel type de soudure d'utiliser un faisceau laser de haute densité d'énergie.

Mais, compte tenu de la forte épaisseur des tôles à souder, les faces latérales à accoster de ces tôles doivent avoir une qualité de surface irréprochable assurant un jeu maximal entre les deux tôles de 0,2mm.

En effet, si le jeu maximal entre les deux tôles est supérieur à O,2mm, le joint soudé s'affaisse et un caniveau apparaît sur la soudure.

Or, la réalisation des faces latérales à accoster remplissant ces conditions nécessite une préparation des tôles non réalisable sur les installations industrielles.

De plus, même si les surfaces à accoster ont été correctement préparées, le joint soudé sera correctement réalisé, mais la ligne de jonction des deux tôles ne sera pas continue et présentera un décalage d'épaisseur en forme de marches d'escalier, avec des points anguleux qui sont des amorces de rupture.

Le document EP-A1-0 279 866 qui représente l'état de la technique le plus proche décrit un procédé de soudage bord à bord d'au moins deux tôles de différentes épaisseurs, supérieures à 3mm, dans lequel:
- on réalise un délardement (3) sur chaque face principale de la tôle la plus épaisse pour ménager au niveau des deux faces latérales à rabouter des deux tôles une épaisseur sensiblement identique à la tôle (1) la moins épaisse,
- on amène les tôles en contact au niveau de leurs faces latérales à rabouter,
- et on réalise un joint soudé au niveau des faces latérales raboutées par fusion locale desdites tôles au moyen du faisceau laser.

La présente invention a pour but de proposer un procédé de soudage bord à bord de tôles fortes d'épaisseur différente permettant de s'affranchir de ces inconvénients.

La présente invention a donc pour objet un procédé de soudage selon la revendication 1.

La surépaisseur de la tôle la plus épaisse est de préférence comprise entre 0,08 et 0,15 fois l'épaisseur de la tôle la plus épaisse,
- la pente du délardement est comprise entre 25 et 33%,
- l'axe du faisceau laser est perpendiculaire au plan des deux tôles à souder ou incliné d'un angle compris entre 0 et 10° dans la direction de la tôle la plus épaisse.

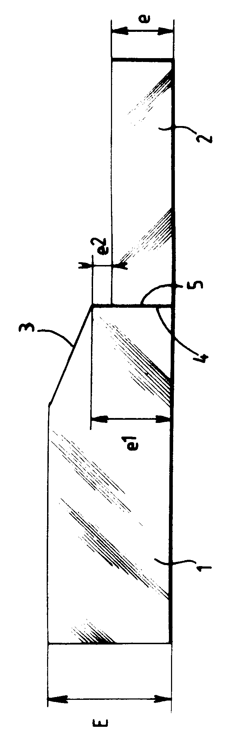

Les caractéristiques et avantages de la présente invention apparaîtront au cours de la description qui va suivre, donnée uniquement à titre d'exemple, faite en référence à la figure annexée qui représente une vue schématique en élévation de deux tôles d'épaisseur différente, prêtes à être soudées par le procédé selon l'invention.

Le procédé selon l'invention permet de souder bord à bord au moins deux tôles, d'épaisseur différente, supérieure à 3mm, au moyen d'un faisceau laser.

Selon un exemple de réalisation, le procédé consiste à souder bord à bord deux tôles 1 et 2, la tôle 1 étant le plus épaisse, d'épaisseur E, par exemple égale à 10mm et la tôle 2 étant la moins épaisse, d'épaisseur e, par exemple égale à 5mm.

Selon le procédé de soudage de l'invention, on réalise un délardement 3 sur l'une des faces principales de la tôle 1 d'épaisseur E pour amener l'épaisseur de sa face latérale 4 destinée à être raboutée sur la face latérale 5 de la tôle 2 d'épaisseur e inférieure à E, à une valeur e₁ inférieure à E et supérieur à e.

La face latérale 4 de la tôle 1 comporte une surépaisseur e₂ par rapport à l'épaisseur e de la tôle 2.

Le délardement 3 est effectué à l'aide d'un outil de coupe classique.

Ensuite, on amène les tôles 1 et 2 en contact au niveau de leurs faces latérales 4 et 5 à rabouter.

Sur la figure unique, la face principale de la tôle 1 opposée à la face principale sur laquelle a été réalisé le délardement 3 est située dans le même plan que l'une des faces principales de la tôle 2.

Après l'accostage des tôles 1 et 2 au niveau de leurs faces latérales 4 et 5, on réalise un joint soudé par fusion locale des tôles 1 et 2 au moyen d'un faisceau laser, non représenté, dont l'axe est perpendiculaire au plan desdites tôles.

L'axe du faisceau laser peut être incliné d'un angle compris entre 0 et 10° dans la direction de la tôle 1 la plus épaisse.

La surépaisseur e₂ ainsi créée au niveau de la face latérale 4 de la tôle 1 par rapport à l'épaisseur de la tôle 2 constitue un métal d'apport pour assurer la continuité du joint soudé et de ce fait du raccordement entre les tôles 1 et 2.

En effet, même si les faces latérales 4 et 5 des tôles 1 et 2 à rabouter ne satisfont pas aux conditions d'état de surface telles que mentionnées précédemment entraînant un jeu entre les deux tôles 1 et 2 supérieur à 0,2mm, le métal supplémentaire apporté par la surépaisseur e₂ de la tôle 1 vient après fusion par le faisceau laser combler les écarts et ainsi le joint soudé est continu et ne présente pas de caniveaux du fait de son affaissement.

Pour que le joint soudé ne s'affaisse pas, c'est à dire que la quantité de métal d'apport soit suffisante, et pour que cette quantité de métal d'apport ne soit pas trop importante, ce qui entraînerait un bombé au niveau du joint soudé, la surépaisseur e₂ doit être comprise entre 0,05 E et 0,20E, E représentant l'épaisseur de la tôle la plus épaisse, c'est à dire l'épaisseur de la tôle 1.

Les meilleurs résultats sont obtenus lorsque la surépaisseur e₂ est comprise entre 0,08E et 0,15E.

Outre cette condition sur la valeur de la surépaisseur e₂ de la face latérale 4 de la tôle 1 par rapport à l'épaisseur e de la tôle 2, il est nécessaire, pour obtenir un joint soudé assurant correctement la continuité angulaire entre les deux tôles 1 et 2, que la pente du délardement 3 soit comprise ente 25 et 33%.

En effet, si la pente du délardement 3 est supérieure à 33%, on risque d'obtenir un congé de raccordement trop pentu avec une zone délicate au niveau du plan de joint, dans laquelle l'augmentation des contraintes locales seraient trop importantes.

Si la pente du délardement 3 est inférieure à 25%, la qualité du joint soudé est correcte, mais il devient plus difficile à réaliser industriellement et entraînerait une réduction de l'épaisseur de la tôle dans une zone plus grande.

Les avantages du procédé de soudage selon la présente invention sont multiples.

En effet, le procédé de soudage selon l'invention permet d'étendre les techniques et les dispositifs connus pour le raboutage de tôles de faible épaisseur, aux tôles de forte épaisseur.

Par ailleurs, le procédé de soudage selon l'invention permet de souder des tôles fortes sans effectuer deux passes de soudage et entraîne une zone affectée thermiquement très faible, inférieure à 1mm pour le soudage de deux tôles dont la tôle la moins épaisse est de 5mm.

Enfin, le procédé selon l'invention permet de réduire les difficultés de l'accostage des tôles à souder.

## Revendications

1. Procédé de soudage bord à bord d'au moins deux tôles (1, 2) de différentes épaisseurs, supérieures à 3mm, dans lequel:
- on réalise un délardement (3) sur une seule des faces principales de la tôle (1) la plus épaisse pour ménager au niveau des deux faces latérales (4, 5) à rabouter des deux tôles (1, 2) une surépaisseur e₂ par rapport à la tôle (2) la moins épaisse comprise entre 0,05 et 0,20 fois l'épaisseur E de la tôle (1) la plus épaisse,
- on amène les tôles (1, 2) en contact au niveau de leurs faces latérales (4, 5) à rabouter de telle sorte que la face principale de la tôle (1) la plus épaisse opposeé à la face principale ayant le délardement (3) et une face principale de la tôle (2) la moins épaisse se trouvent dans un même plan,
- et on réalise un joint soudé au niveau des faces latérales (4, 5) raboutées par fusion locale desdites tôles (1, 2) au moyen du faisceau laser.

2. Procédé de soudage selon la revendication 1, caractérisé en ce que la surépaisseur e₂ au niveau des deux faces latérales (4, 5) à rabouter des deux tôles (1, 2) est comprise entre 0,08 et 0,15 fois l'épaisseur E de la tôle la plus épaisse.

3. Procédé de soudage selon la revendication 1, caractérisé en ce que la pente du délardement (3) est comprise entre 25 et 33%.

4. Procédé de soudage selon la revendication 1, caractérisé en ce que l'axe du faisceau laser est perpendiculaire au plan des deux tôles (1, 2) à souder.

5. Procédé de soudage selon la revendication 1, caractérisé en ce que l'axe du faisceau laser est incliné d'un angle compris entre 0 et 10° dans la direction de la tôle (1) la plus épaisse.

## Claims

1. A method of edge to edge welding of at least two metal sheets (1, 2) having different thicknesses, greater than 3 mm, in which:
- a chamfer (3) is formed on one only of the principal faces of the metal sheet (1) of greater thickness so as to provide an excess thickness e₂ in the region of the two side edges (4, 5) of the two metal sheets (1, 2) to be joined together lying between 0.05 and 0.20 times the thickness E of the metal sheet (1) of greater thickness,
- the metal sheets (1, 2) are placed in contact at their side edges (4, 5) to be joined together in such a manner that the principal face of the sheet (1) of greater thickness opposite the principal face with the chamfer (3) and one principal face of the metal sheet (2) of lesser thickness lie in the same plane,
- and a welded joint is formed in the region of the butted side edges (4, 5) by local fusion of the said metal sheets (1, 2) by means of a laser beam.

2. A method of welding according to claim 1, characterized in that the excess thickness e₂ in the region of the two side edges (4, 5) of the two metal sheets (1, 2) to be joined together lies between 0.08 and 0.15 times the thickness E of the metal sheet of greater thickness.

3. A method of welding according to claim 1, characterized in that the slope of the chamfer (3) lies between 25 and 33%.

4. A method of welding according to claim 1, characterized in that the axis of the laser beam is perpendicular to the plane of the two metal sheets (1, 2) to be welded.

5. A method of welding according to claim 1, characterized in that the axis of the laser beam is inclined towards the metal sheet (1) of greater thickness at an angle lying between 0 and 10°.

## Patentansprüche

1. Verfahren zum Verschweißen mindestens zweier Metallbleche (1, 2) verschiedener Dicke, größer als 3 mm, mit den Schritten:
- Erzeugen einer Abschrägung (3) auf einer einzigen Hauptfläche des Metallblechs (1) mit der größten Dicke zum Einrichten einer Überdicke e₂ bezüglich des Metallblechs (2) mit der geringsten Dicke auf Höhe der zwei Seitenflächen (4, 5) zum Anstücken der zwei Metallbleche (1, 2), welche das 0,05 - 0,20-fache der Dicke E des Metallblechs (1) mit der größten Dicke beträgt,
- Bringen der Metallbleche (1, 2) in Kontakt auf Höhe ihrer Seitenflächen (4, 5) zum Anstücken derart, daß die Hauptfläche des Metallbleches (1) mit der größten Dicke gegenüberliegend der Hauptfläche mit der Abschrägung (3) und eine Hauptfläche des Metallblechs (2) mit der geringsten Dicke sich in derselben Ebene befinden, und
- Erzeugen einer Schweißverbindung auf Höhe der angestückten Seitenflächen (4, 5) durch lokale Verschmelzung der Metallbleche (1, 2) mittels eines Laserstrahls.

2. Schweißverfahren nach Anspruch 1, dadurch gekennzeichnet, daß die Überdicke e₂ auf Höhe der zwei Seitenflächen (4, 5) zum Anstücken der zwei Metallbleche (1, 2) das 0,08 - 0,15-fache der Dicke E des Metallbleches mit der größten Dicke beträgt.

3. Schweißverfahren nach Anspruch 1, dadurch gekennzeichnet, daß die Steigung der Abschrägung (3) zwischen 25 und 33 % beträgt.

4. Schweißverfahren nach Anspruch 1, dadurch gekennzeichnet, daß die Achse des Laserstrahls senkrecht zur Ebene der zwei zu verschweißenden Metallbleche (1, 2) liegt.

5. Schweißverfahren nach Anspruch 1, dadurch gekennzeichnet, daß die Achse des Laserstrahls um einen Winkel zwischen 0 und 10° in der Richtung des Metallblechs (1) mit der größten Dicke geneigt ist.
